# EUROPEAN PATENT APPLICATION

(11) **EP 4 831 714 A1**
(43) Date of publication of application: **28.10.2026**
(21) Application number: 26152753.5
(22) Date of filing: 19.01.2026
(51) Int. Cl.: G02B 13/16, G02B 15/14, G02B 7/10, G03B 21/53

(54) **PROJECTION LENS AND PROJECTOR**

(30) Priority: 23.04.2025 CN 202510522643
(71) Applicant: Anker Innovations Technology Co., Ltd., Changsha, Hunan 410221 (CN)
(72) Inventor: TANG, Xiaofeng, Changsha City, 410221 (CN)
(74) Representative: De Arpe Tejero, Manuel

(57) **Abstract**

The present application provides a projection lens (1) and a projector. The projection lens (1) includes a lens barrel (10), a lens optical group (20), and a zoom detection assembly (40). The lens optical group (20) is located in the lens barrel (10) and has a first optical axis (H). The lens optical group (20) includes a zoom lens group (22) that is capable of moving along an extending direction of the first optical axis (H). The zoom detection assembly (40) includes a zoom moving element and a zoom detection element. One of the zoom moving element and the zoom detection element is connected to the zoom lens group (22), and the other thereof is fixedly arranged. The zoom detection element is configured to cooperate with the zoom moving element to detect a moving distance of the zoom lens group (22) relative to the lens barrel (10).

## Description

### TECHNICAL FIELD

The present disclosure relates to the field of projection equipment, and in particular to a projection lens and a projector.

### BACKGROUND ART

A projector can be used as office equipment. The projector can not only be applied in temporary meetings, technical lectures, network centers, command and monitoring centers, but also connected to computers, workstations, etc., or connected to video recorders, televisions, DVD (digital versatile disc) players, and document cameras. It can be said that the projector is a widely used large-screen imaging equipment. However, projection equipment in the related art has difficulty improving the accuracy of its fixed-focus or zoom functions.

### SUMMARY OF THE DISCLOSURE

The embodiments of the present disclosure provide a projection lens and a projector, which can improve the accuracy of focusing and/or zooming of the projection lens.

In a first aspect, some embodiments of the present disclosure provide a projection lens, including: a lens barrel; a lens optical group, located in the lens barrel, where the lens optical group has a first optical axis and includes a zoom lens group capable of moving along an extending direction of the first optical axis relative to the lens barrel; a zoom detection assembly including a zoom moving element and a zoom detection element, where one of the zoom moving element and the zoom detection element is connected to the zoom lens group to move and zoom by following the zoom lens group , the other thereof is fixedly arranged relative to the lens barrel, and the zoom detection element is configured to cooperate with the zoom moving element to detect a position of the zoom lens group relative to the lens barrel.

In a second aspect, some embodiments of the present disclosure provide a projection lens, including: a lens barrel; a lens optical group, located in the lens barrel, where the lens optical group has a first optical axis and includes a zoom lens group and a focusing lens group arranged along an extending direction of the first optical axis, both the zoom lens group and the focusing lens group are capable of sliding along the extending direction of the first optical axis relative to the lens barrel; a zoom detection assembly, including a zoom moving element and a zoom detection element, where one of the zoom moving element and the zoom detection element is connected to the zoom lens group to move and zoom by following the zoom lens group, the other thereof is fixedly arranged relative to the lens barrel, and the zoom detection element is configured to cooperate with the zoom moving element to detect a moving distance of the zoom lens group relative to the lens barrel; and a focusing detection assembly, including a focusing moving element and a focusing detection element, where one of the focusing moving element and the focusing detection element is connected to the focusing lens group to move and focus by following the focusing lens group, the other thereof is fixedly arranged relative to the lens barrel, and the focusing detection element is configured to cooperate with the focusing moving element to detect a position of the focusing lens group relative to the lens barrel.

In a third aspect, some embodiments of the present disclosure further provide a projector including an optical engine and the projection lens according to any one of the above embodiments. The projection lens is connected to the optical engine, and a light source of the optical engine is projected onto an external projection plane through the projection lens.

Based on the projection lens and the projector in some embodiments of the present disclosure, in some embodiments, one of the zoom moving element and the zoom detection element is arranged on the zoom lens group, and the other thereof is arranged on the fixed fixed lens group. Meanwhile, one of the focusing moving element and the focusing detection element is arranged on the focusing lens group, and the other thereof is arranged on the fixed fixed lens group. In a case where the projection lens is performing focusing and/or zooming, the cooperation between the zoom detection element and the zoom moving element may detect the position required for focusing of the projection lens, and the cooperation between the focusing detection element and the focusing moving element may detect the position required for zooming of the projection lens. Thus, the zoom lens group and the focusing lens group can be directly driven to the positions that need to be adjusted, thereby realizing the focusing and zooming functions of the projection lens. In some embodiments, by arranging the zoom detection assembly and the focusing detection assembly on different lens groups, the time required for the projection lens in the focusing and/or zooming process can be shortened, and the accuracy of focusing and/or zooming of the projection lens can be improved.

### BRIEF DESCRIPTION OF THE DRAWINGS

To more clearly illustrate the technical solutions in the embodiments of the present disclosure or the related art, the following will briefly introduce the drawings that need to be used in the description of the embodiments or the related art. Obviously, the drawings in the following description are only some embodiments of the present disclosure. For those of ordinary skill in the art, other drawings can be obtained according to these drawings without creative work.
FIG. 1 is a schematic structural diagram of a lens in some embodiments of the present disclosure.
FIG. 2 is a schematic structural diagram of a lens optical group in some embodiments of the present disclosure.

Reference numerals: projection lens 1; lens barrel 10; curved groove 11; lens optical group 20; focusing lens group 21; zoom lens group 22; first lens group 221; second lens group 222; third lens group 223; fourth lens group 224; first lens L1; second lens L2; third lens L3; fourth lens L4; fifth lens L5; sixth lens L6; seventh lens L7; aperture STO; fixed lens group23; focusing detection assembly 30; zoom detection assembly 40; first transmission element 51; second transmission element 52; first optical axis H.

### DETAILED DESCRIPTION

To more clearly illustrate the technical solutions in the embodiments of the present disclosure or related art, the following will describe them clearly and completely in combination with the drawings in the embodiments of the present disclosure. Obviously, the described embodiments are only part of the embodiments of the present disclosure, not all of them. Based on the embodiments in the present disclosure, all other embodiments obtained by those of ordinary skill in the art without creative work fall within the protection scope of the present disclosure.

In the related art, a position sensor is usually arranged in the lens of a projector, and the position sensor can move along the optical axis direction following the projection lens to detect the front and rear displacement of the projection lens, thereby realizing the focusing or zooming function of the projection lens. However, the displacement of the projection lens in the projector is small, so how to reduce the error generated in a case where the projector is in focusing and zooming is particularly important.

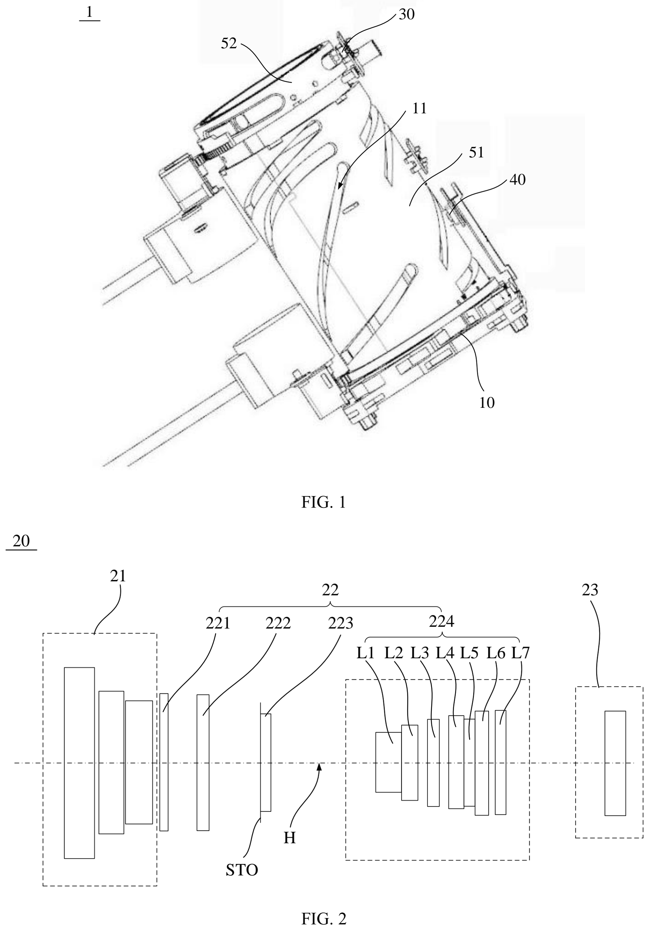

In view of the above situation, in a first aspect, referring to FIGS. 1-2, the present disclosure may propose a projection lens 1, including a lens barrel 10, a lens optical group 20, and a zoom detection assembly 40.

The lens optical group 20 may be located in the lens barrel 10, the lens optical group 20 may have a first optical axis H, the lens optical group 20 may include a zoom lens group 22, and the zoom lens group 22 can slide along an extending direction of the first optical axis H relative to the lens barrel 10. The zoom detection assembly 40 may include a zoom moving element and a zoom detection element (not separately shown in the figures), one of the zoom moving element and the zoom detection element may be connected to the zoom lens group 22 to move and zoom by following the zoom lens group 22, and the other thereof may be fixedly arranged relative to the lens barrel 10, the zoom detection element may be configured to cooperate with the zoom moving element to detect a moving distance of the zoom lens group 22 relative to the lens barrel 10.

In some embodiments, the lens barrel 10 may provide an installation space for the lens optical group 20. The zoom lens group 22 may include a lens holder and at least one lens. The at least one lens may be installed on the lens holder, and the lens holder may be slidably connected to the lens barrel 10 along the extending direction of the first optical axis H, thereby driving the lenses to slide along the extending direction of the first optical axis H. The lens barrel 10 may have a front side and a rear side. The distance between the front side of the lens barrel 10 and an object to be photographed may be small, and the distance between the rear side of the lens barrel 10 and the object to be photographed may be large. The zoom lens group 22 can be configured as the zoom group of the projection lens 1, located in a middle of the lens barrel 10. The zoom lens group 22 may change a focal length of the projection lens 1 through movement, thereby causing changes in the viewing angle or image size, and obtaining the effect of zooming in or out.

It should be noted that, in some embodiments of the present disclosure, one of the zoom moving element and the zoom detection element may be arranged on the zoom lens group 22, and the other thereof may be fixedly arranged on the lens barrel 10. In a case where the projection lens 1 may be performing zooming, the cooperation between the zoom moving element and the zoom detection element may detect the moving distance required for zooming of the projection lens 1, so that the zoom lens group 22 may be directly driven to the position that may need to be adjusted, thereby realizing the zoom function of the projection lens 1. In some embodiments, by arranging the zoom detection assembly 40 on different optical components, the time required for the projection lens 1 in the zooming process may be shortened, and the accuracy of zooming of the projection lens 1 can be improved.

Referring to FIG. 1, in some embodiments of the present disclosure, the lens optical group 20 may further include a fixed lens group 23 fixed to the lens barrel 10. The fixed lens group 23 and the zoom lens group 22 may be arranged along the extending direction of the first optical axis H. One of the zoom moving element and the zoom detection element may be connected to the zoom lens group 22, and the other thereof may be connected to the fixed lens group 23. The zoom detection element may be configured to cooperate with the zoom moving element to detect a distance between the zoom lens group 22 and the fixed lens group 23.

In some embodiments, the fixed lens group 23 may provide an installation basis for one of the zoom moving element and the zoom detection element. The fixed lens group 23 may be located on the rear side of the lens barrel 10, provide basic optical power for the lens optical group 20, and remain fixed. The fixed lens group 23 may also provide a reference for the movement of the zoom lens group 22.

In some embodiments of the present disclosure, the zoom detection element may be a first magnet, the zoom moving element may be a first sensor, and the first sensor may be configured to sense a magnetic signal of the first magnet to detect the distance between the zoom lens group 22 and the fixed lens group 23.

In some embodiments, the first sensor may sense the magnetic field strength of the first magnet. According to the principle of distance attenuation of the magnetic field, in a case where the first magnet and the first sensor may be in different relative positions, the magnetic field strength of the first magnet sensed by the first sensor may be different. One of the first magnet and the first sensor may move along the extending direction of the first optical axis H by following the zoom lens group 22, and the other of the first magnet and the first sensor may be fixed at a position of the fixed lens group 23. At this time, a mapping relationship may be established between the position of the fixed lens group 23 and the magnetic field strength sensed by the first sensor.

Exemplarily, in a case where the position of the first magnet may move, the magnetic field of the first magnet may move with the first magnet, and the magnetic field strength sensed by the first sensor may change. At this time, the zoom lens group 22 may be directly driven in the projection lens 1 to the position where the first sensor may sense a preset magnetic field strength, thereby completing the zooming process of the projection lens 1 and capturing a clear image. In some embodiments, the first sensor may be a tunnel magneto resistance (TMR) sensor. The TMR sensor may have good temperature stability, higher sensitivity, lower power consumption, and better linearity. Therefore, the application of the TMR sensor may further optimize the zoom performance of the projection lens 1.

Further, in some embodiments, the first magnet may be a magnetic strip, that may be, the first magnet may include a plurality of magnetic blocks connected end to end. The first magnet may have a plurality of N poles and a plurality of S poles, and the plurality of N poles and the plurality of S poles of the first magnet may be alternately arranged along the extending direction of the first optical axis H. Thus, the magnetic field generated by the first magnet may be a periodic sine wave. The first sensor may more accurately measure the distance between the zoom lens group 22 and the fixed lens group 23 by sensing this periodically changing magnetic field, and may also effectively reduce external interference, thereby improving the accuracy and stability of zooming of the projection lens 1. Through this periodic sine wave magnetic field, the first sensor may not only accurately measure the distance to ensure the stability and accuracy during the zooming process, but also the first magnet may maintain high sensitivity in complex environments, reduce errors, so that the projection lens 1 may present clear images at different focal lengths, significantly improving the imaging quality of the projection lens 1.

In some embodiments of the present disclosure, as shown in FIG. 1, the projection lens 1 may further include a first transmission element 51. The first transmission element 51 may be movably connected to the lens barrel 10 and drivingly connected to the zoom lens group 22. The first transmission element 51 may be configured to drive the zoom lens group 22 to slide along the extending direction of the first optical axis H.

In some embodiments, the first transmission element 51 may adopt a stepping motor to realize fine zooming of the zoom lens group 22. Exemplarily, the first transmission element 51 may be a zoom barrel, which may be rotatably connected to the lens barrel 10. The zoom barrel may drive the zoom lens group 22 to slide along the extending direction of the first optical axis H through rotation, thereby realizing independent control of zooming of the projection lens 1.

Further, in some embodiments of the present disclosure, the projection lens 1 may further include a drive assembly (not shown in the figures) arranged in the lens barrel 10. The drive assembly may be electrically connected to the first sensor. The drive assembly may be configured to receive a detection signal of the first sensor and drive the first transmission element 51 to drive the zoom lens group 22 to slide along the extending direction of the first optical axis H.

In some embodiments, the drive assembly may have a built-in microprocessor, which may be configured to process detection data of the first sensor in real time, thereby optimizing the movement trajectory of the zoom lens group 22, ensuring the precise positioning of the zoom lens group 22, and thus improving the imaging quality of the projection lens 1. Through the cooperative work of the drive assembly and the first sensor, the automatic zoom operation of the projection lens 1 may be realized, ensuring quick response in various shooting environments, capturing clear images, so as to meet the high dynamic shooting needs.

Referring to FIG. 1, in some embodiments of the present disclosure, the zoom moving element may be connected to the zoom lens group 22, and the zoom detection element may be fixedly arranged relative to the lens barrel 10. The lens barrel 10 may be provided with a curved groove 11 formed thereon, and the zoom moving element may slide along the extending direction of the first optical axis H in the curved groove 11. It is easy to understand that the curved groove 11 may play a guiding role for the zoom moving element, facilitating the zoom moving element to move accurately in the curved groove 11 according to a preset curved trajectory, and ensuring that the imaging quality of the projection lens 1 during the zooming process may be not affected.

In some embodiments of the present disclosure, a maximum sliding distance of the zoom lens group 22 along the extending direction of the first optical axis H may be greater than 30mm.

In some embodiments, during the sliding zooming of the zoom lens group 22, the zoom moving element and the zoom detection element may real-time feedback data required for zooming of the projection lens 1 by detecting the displacement change of the zoom lens group 22. Exemplarily, the zoom moving element may be arranged on the zoom lens group 22, and the zoom detection element may be arranged on the fixed lens group 23. During the zooming process of the projection lens 1, since the range of the maximum sliding distance of the zoom lens group 22 may be large, the displacement of the zoom moving element may be also large, thereby reducing the error generated in a case where the zoom detection element may detect the displacement of the zoom moving element, ensuring data accuracy, further optimizing zoom precision, improving imaging quality, and meeting the high requirements in complex shooting environments.

It should be noted that, in some embodiments, as shown in FIG. 2, the zoom lens group 22 may include a first lens group 221, a second lens group 222, a third lens group 223, and a fourth lens group 224 sequentially arranged along the extending direction of the first optical axis H. The first lens group 221, the second lens group 222, the third lens group 223, and the fourth lens group 224 may be all slidably connected to the lens barrel 10, and sliding distances between the four lens groups may be different.

In some embodiments, the zoom lens group 22 may be configured as the zoom group of the projection lens 1. The zoom group may adopt a four-group linkage design. By fine-tuning a spacing and a position of the first lens group 221 to the fourth lens group 224, a light refraction path may be accurately controlled, realizing multi-level zooming, and ensuring the optimization of optical performance at different focal lengths. The four lens groups may cooperate with each other to correct primary and advanced aberrations, reduce chromatic aberration and distortion, ensure rich image details, and further improve the overall imaging effect of the projection lens 1. Meanwhile, through the coordinated optimization of the four lens groups, a throw ratio change and miniaturization of the projection lens 1 may be realized.

Further, as shown in FIG. 2, the fourth lens group 224 may include seven lenses with optical power. The seven lenses may be sequentially a first lens L1, a second lens L2, a third lens L3, a fourth lens L4, a fifth lens L5, a sixth lens L6, and a seventh lens L7 along the extending direction of the first optical axis H. Among them, the first lens L1 and the second lens L2 may be cemented, and the fourth lens L4, the fifth lens L5, and the sixth lens L6 may be cemented. It is easy to understand that the seven lenses in the fourth lens group 224 may be arranged in a ratio of 2:1:3:1, which may play a role in correcting chromatic aberration.

Materials of the first lens L1 to the seventh lens L7 may be plastic or glass. For example, the first lens L1 to the seventh lens L7 may be plastic lenses. The use of plastic lenses may not only effectively reduce an aberration of the zoom lens group 22 and a length of the zoom lens group 22, but also make an overall weight of the zoom lens group 22 lighter. Exemplarily, the material of at least one lens in the lens optical group 20 may be plastic (PC), and the plastic material may be polycarbonate, gum, etc.; alternatively, the material of at least one lens in the lens optical group 20 may be glass (GL); alternatively, lenses of different materials may be arranged in the lens optical group 20, that may be, a design combining glass lenses and plastic lenses may be adopted. Lens made of plastic material may reduce the production cost of the lens optical group 20, while lens made of glass material may withstand higher or lower temperatures and have excellent optical effects and better stability. The specific configuration relationship of lenses of different materials may be determined according to actual needs, which may not be exhausted here.

Further, in some embodiments of the present disclosure, the maximum sliding distance of the first lens group 221 along the extending direction of the first optical axis H may be greater than 5mm; the maximum sliding distance of the second lens group 222 along the extending direction of the first optical axis H may be greater than 5mm; the maximum sliding distance of the third lens group 223 along the extending direction of the first optical axis H may be greater than 30mm; the maximum sliding distance of the fourth lens group 224 along the extending direction of the first optical axis H may be greater than 10mm. Among them, limiting the maximum sliding distance of each lens group may accurately set the sliding distance of each lens group, improve the smoothness of the projection lens 1 during the zooming process, and ensure the stable performance of the projection lens 1 at different focal lengths.

Further, one of the zoom moving element and the zoom detection element may be arranged on the third lens group 223, and the other of the zoom moving element and the zoom detection element may be fixedly arranged relative to the lens barrel 10. It is easy to understand that the maximum sliding distance of the third lens group 223 along the extending direction of the first optical axis H may be greater than 30mm, so the moving distance sensed by the zoom detection assembly 40 may be also greater than 30mm.

In some embodiments, during the sliding zooming of the zoom lens group 22, the zoom moving element and the zoom detection element may real-time feedback the data required for zooming of the projection lens 1 by detecting the displacement change of the third lens group 223. Exemplarily, the zoom moving element may be arranged on the third lens group 223, and the zoom detection element may be arranged on the fixed lens group 23. During the zooming process of the projection lens 1, since the range of the maximum sliding distance of the third lens group 223 may be large, the displacement of the zoom moving element may be also large, thereby reducing the error generated in a case where the zoom detection element may detect the displacement of the zoom moving element, ensuring data accuracy, further optimizing zoom precision, improving imaging quality, and meeting the high requirements in complex shooting environments.

Further, as shown in FIG. 2, the zoom lens group 22 may further include an aperture STO, which may be arranged on the third lens group 223 to control a light transmittance and a depth of field, and correct off-axis aberrations (such as coma, astigmatism, etc.), thereby improving imaging quality.

In a second aspect, referring to FIGS. 1-2, the present disclosure may propose a projection lens 1, including a lens barrel 10, a lens optical group 20, a focusing detection assembly 30, and a zoom detection assembly 40.

The lens optical group 20 may be located in the lens barrel 10, the lens optical group 20 may have a first optical axis H. The lens optical group 20 may include a focusing lens group 21 and a zoom lens group 22 sequentially arranged along an extending direction of the first optical axis H, and both the focusing lens group 21 and the zoom lens group 22 can slide along the extending direction of the first optical axis H relative to the lens barrel 10. The zoom detection assembly 40 may include a zoom moving element and a zoom detection element (not separately shown in the figures). One of the zoom moving element and the zoom detection element may be arranged on the zoom lens group 22, and the other of the zoom moving element and the zoom detection element may be fixedly arranged relative to the lens barrel 10. The zoom detection element may be configured to cooperate with the zoom moving element to detect a moving distance of the zoom lens group 22 relative to the lens barrel 10. The focusing detection assembly 30 may include a focusing moving element and a focusing detection element (not separately shown in the figures). One of the focusing moving element and the focusing detection element may be arranged on the focusing lens group 21 and the other of the focusing moving element and the focusing detection element may be fixedly arranged relative to the lens barrel 10. The focusing detection element may be configured to cooperate with the focusing moving element to detect the moving distance of the focusing lens group 21 relative to the lens barrel 10.

In some embodiments, the lens barrel 10 may provide an installation space for the lens optical group 20. Both the focusing lens group 21 and the zoom lens group 22 may include a lens holder and at least one lens. The at least one lens may be installed on the lens holder, and the lens holder may be slidably connected to the lens barrel 10 along the extending direction of the first optical axis H, thereby driving the lenses to slide along the extending direction of the first optical axis H. The lens barrel 10 may have a front side and a rear side. The distance between the front side of the lens barrel 10 and an object to be photographed may be small, and the distance between the rear side of the lens barrel 10 and the object to be photographed may be large. The focusing lens group 21 may be configured as the focusing group of the projection lens 1, located on the front side of the lens barrel 10, so as to adjust the front and rear positions according to the object distance, make the imaging clearer, and the focusing lens group 21 may also be configured to correct distortion and improve the imaging quality of the projected image. The zoom lens group 22 may be configured as the zoom group of the projection lens 1, located between the focusing lens group 21 and the fixed lens group 23, that may be, in the middle of the lens barrel 10. The zoom lens group 22 may change the focal length of the projection lens 1 through movement, thereby causing changes in the viewing angle or image size, and obtaining the effect of zooming in or out.

It should be noted that, in some embodiments of the present disclosure, one of the zoom moving element and the zoom detection element may be arranged on the zoom lens group 22, and the other of the zoom moving element and the zoom detection element may be fixedly arranged relative to the lens barrel 10. Meanwhile, one of the focusing moving element and the focusing detection element may be arranged on the focusing lens group 21, and the other of the focusing moving element and the focusing detection element may be fixedly arranged relative to the lens barrel 10. In a case where the projection lens 1 may be performing focusing and zooming, the cooperation between the focusing moving element and the focusing detection element may detect the moving distance required for focusing of the projection lens 1, and the cooperation between the zoom moving element and the zoom detection element may detect the moving distance required for zooming of the projection lens 1. Thus, the focusing lens group 21 and the zoom lens group 22 may be directly driven to the positions that may need to be adjusted, thereby realizing the focusing and zooming functions of the projection lens 1. In some embodiments, by arranging the focusing detection assembly 30 and the zoom detection assembly 40 on different optical components, the time required for the projection lens 1 in the focusing and zooming process may be shortened, and the accuracy of focusing and zooming of the projection lens 1 may be improved.

Referring to FIG. 1, in some embodiments of the present disclosure, the lens optical group 20 may further include a fixed lens group 23 fixed to the lens barrel 10. The focusing lens group 21, the zoom lens group 22, and the fixed lens group 23 may be sequentially arranged along the extending direction of the first optical axis H. Among them, one of the zoom moving element and the zoom detection element may be connected to the zoom lens group 22, the other of the zoom moving element and the zoom detection element may be connected to the fixed lens group 23, and the zoom detection element may be configured to cooperate with the zoom moving element to detect the distance between the zoom lens group 22 and the fixed lens group 23. One of the focusing moving element and the focusing detection element may be connected to the focusing lens group 21, the other of the focusing moving element and the focusing detection element may be connected to the fixed lens group 23, and the focusing detection element may be configured to cooperate with the focusing moving element to detect the distance between the focusing lens group 21 and the fixed lens group 23.

In some embodiments, the fixed lens group 23 can provide an installation basis for part of the zoom detection assembly 40 and part of the focusing detection assembly 30. The fixed lens group 23 may be located on the rear side of the lens barrel 10, providing basic optical power for the lens optical group 20, and the fixed lens group 23 may remain fixed, providing a reference for the movement of the zoom lens group 22 and the focusing lens group 21.

In some embodiments of the present disclosure, the zoom detection element may be a first magnet, the zoom moving element may be a first sensor, and the first sensor may be configured to sense a magnetic signal of the first magnet to detect the distance between the zoom lens group 22 and the fixed lens group 23. The first magnet may be a magnetic strip.

In some embodiments, in a case where the position of the first magnet may move, a magnetic field of the first magnet may move with the first magnet, and the magnetic field strength sensed by the first sensor may change. At this time, the zoom lens group 22 may be directly driven in the projection lens 1 to the position where the first sensor may sense a preset magnetic field strength, thereby completing the zooming process of the projection lens 1 and capturing a clear image.

Similarly, in some embodiments of the present disclosure, the focusing detection element may be a second magnet, the focusing moving element may be a second sensor, and the second sensor may be configured to sense the magnetic signal of the second magnet to detect the distance between the focusing lens group 21 and the fixed lens group 23.

Exemplarily, in a case where the position of the second magnet may move, the magnetic field of the second magnet may move with the second magnet, and the magnetic field strength sensed by the second sensor may change. At this time, the focusing lens group 21 may be directly driven in the projection lens 1 to the position where the second sensor may sense the preset magnetic field strength, thereby completing the focusing process of the projection lens 1. In some embodiments, both the first sensor and the second sensor may be tunnel magneto resistance (TMR) sensors. The TMR sensors may have good temperature stability, higher sensitivity, lower power consumption, and better linearity. Therefore, the application of the TMR sensor may further optimize the focusing and zooming performance of the projection lens 1.

Referring to FIG. 1, in some embodiments of the present disclosure, the projection lens 1 may further include a first transmission element 51 and a second transmission element 52. The first transmission element 51 may be movably connected to the lens barrel 10 and drivingly connected to the zoom lens group 22. The first transmission element 51 may be configured to drive the zoom lens group 22 to slide along the extending direction of the first optical axis H. The second transmission element 52 may be movably connected to the lens barrel 10 and drivingly connected to the focusing lens group 21. The second transmission element 52 may be configured to drive the focusing lens group 21 to slide along the extending direction of the first optical axis H.

In some embodiments, the second transmission element 52 can be driven by a motor to precisely control the movement of the focusing lens group 21 to ensure focusing accuracy. The first transmission element 51 can adopt a stepping motor to realize fine zooming of the zoom lens group 22. The first transmission element 51 and the second transmission element 52 work together to improve the overall performance of the projection lens 1. Exemplarily, the second transmission element 52 may be a focusing ring, and the first transmission element 51 may be a zoom barrel. Both the focusing ring and the zoom barrel may be rotatably connected to the lens barrel 10. The focusing ring can drive the focusing lens group 21 to slide along the extending direction of the first optical axis H in the lens barrel 10 through rotation, and the zoom barrel can drive the zoom lens group 22 to slide along the extending direction of the first optical axis H through rotation, thereby realizing independent control of focusing and zooming of the projection lens 1.

Further, in some embodiments of the present disclosure, the projection lens 1 may further include a drive assembly (not shown in the figures) arranged in the lens barrel 10. The drive assembly may be electrically connected to both the first sensor and the second sensor. The drive assembly may be configured to receive a detection signal of the first sensor and drive the first transmission element 51 to drive the zoom lens group 22 to slide along the extending direction of the first optical axis H. The drive assembly may be also configured to receive the detection signal of the second sensor and drive the second transmission element 52 to drive the focusing lens group 21 to slide along the extending direction of the first optical axis H.

In some embodiments, the drive assembly may have a built-in microprocessor, which can be configured to process detection data of the first sensor and the second sensor in real time, thereby optimizing the movement trajectories of the focusing lens group 21 and the zoom lens group 22, ensuring the precise positioning of the focusing lens group 21 and the zoom lens group 22, and thus improving the imaging quality of the projection lens 1. Through the cooperative work of the drive assembly and the sensors, the automatic focusing and zooming operations of the projection lens 1 may be realized, ensuring quick response in various shooting environments, capturing clear images, so as to meet the high dynamic shooting needs.

In some embodiments of the present disclosure, a maximum sliding distance of the focusing lens group 21 along the extending direction of the first optical axis H may be less than 5mm. Among them, the focusing lens group 21 can be configured as a focusing group, and its maximum sliding distance may be small, which can ensure its efficient operation in a limited space and improve focusing speed. Meanwhile, since the maximum sliding distance of the focusing lens group 21 may be small, the second magnet can adopt a magnet to reduce production costs.

In a third aspect, some embodiments of the present disclosure may further provide a projector (not shown in the figures), which may include an optical engine and the projection lens 1 according to any one of the above embodiments. The projection lens 1 may be connected to the optical engine, and a light source of the optical engine may be projected onto an external projection plane through the projection lens 1.

In some embodiments, the optical engine in the projector can convert an input signal into an optical image and project it onto an external projection plane (such as a screen or a wall) through the projection lens 1. The projection lens 1 can realize the focusing and zooming functions of the projection lens 1 by adjusting the positions of the zoom lens group 22 and/or the focusing lens group 21 relative to the fixed lens group 23, thereby improving the clarity of the image projected by the projector.

In the drawings of the embodiments of the present disclosure, the same or similar reference numerals may correspond to the same or similar components. In the description of the present disclosure, it should be understood that in a case where the terms "upper", "lower", "left", "right", etc. may indicate the orientation or positional relationship based on the orientation or positional relationship shown in the drawings, it may be only for the convenience of describing the present disclosure and simplifying the description, rather than indicating or implying that the referred component or element must have a specific orientation, be constructed and operated in a specific orientation. Therefore, the terms describing the positional relationship in the drawings may be only for exemplary illustration and cannot be understood as a limitation of the present disclosure. For those of ordinary skill in the art, the specific meanings of the above terms can be understood according to specific situations.

The above may be only preferred embodiments of the present disclosure and may be not intended to limit the present disclosure. Any modifications, equivalent replacements, and improvements made within the spirit and principles of the present disclosure shall be included in the protection scope of the present disclosure.

## Claims

1. A projection lens (1), comprising:
a lens barrel (10);
a lens optical group (20), located in the lens barrel (10), wherein the lens optical group (20) has a first optical axis (H) and comprises a zoom lens group (22) capable of moving along an extending direction of the first optical axis (H) relative to the lens barrel (10);
a zoom detection assembly (40), comprising a zoom moving element and a zoom detection element, wherein one of the zoom moving element and the zoom detection element is connected to the zoom lens group (22) to move and zoom by following the zoom lens group (22), the other thereof is fixedly arranged relative to the lens barrel (10), and the zoom detection element is configured to cooperate with the zoom moving element to detect a position of the zoom lens group (22) relative to the lens barrel (10).

2. The projection lens (1) as claimed in claim 1, wherein the lens optical group (20) further comprises a fixed lens group (23) fixed to the lens barrel (10), the fixed lens group (23) and the zoom lens group (22) are arranged along the extending direction of the first optical axis (H), one of the zoom moving element and the zoom detection element is connected to the zoom lens group (22), the other thereof is connected to the fixed lens group (23), and the zoom detection element is configured to cooperate with the zoom moving element to detect positions of the zoom lens group (22) and the fixed lens group (23).

3. The projection lens (1) as claimed in claim 1, wherein the zoom detection element is a first magnet, the zoom moving element is a first sensor, and the first sensor is configured to sense a magnetic signal of the first magnet to detect the position of the zoom lens group (22) relative to the lens barrel (10).

4. The projection lens (1) as claimed in claim 3, wherein the first magnet comprises a plurality of magnetic blocks connected end to end, and a plurality of N poles and a plurality of S poles of the first magnet are alternately arranged along the extending direction of the first optical axis (H).

5. The projection lens (1) as claimed in claim 1, wherein a maximum sliding distance of the zoom lens group (22) along the extending direction of the first optical axis (H) is greater than 30mm.

6. The projection lens (1) as claimed in claim 1, wherein the zoom moving element is connected to the zoom lens group (22), and the zoom detection element is fixedly arranged relative to the lens barrel (10);
the lens barrel (10) is arranged with a curved groove (11) formed thereon, and the zoom moving element slides in the curved groove (11) along the extending direction of the first optical axis (H).

7. The projection lens (1) as claimed in claim 1, wherein the zoom lens group (22) comprises a first lens group (221), a second lens group (222), a third lens group (223), and a fourth lens group (224) sequentially arranged along the extending direction of the first optical axis (H); the first lens group (221), the second lens group (222), the third lens group (223), and the fourth lens group (224) are slidably connected to the lens barrel (10) respectively; and spacings and positions of the first lens group (221) to the fourth lens group (224) are adjustable to control a light refraction path.

8. The projection lens (1) as claimed in claim 7, wherein the fourth lens group (224) comprises a first lens (L1), a second lens (L2), a third lens (L3), a fourth lens (L4), a fifth lens (L5), a sixth lens (L6) and a seventh lens (L7) sequentially arranged along the extending direction of the first optical axis (H); the first lens (L1) and the second lens (L2) are cemented; and the fourth lens (L4), the fifth lens (L5), and the sixth lens (L6) are sequentially cemented.

9. The projection lens (1) as claimed in claim 1,
wherein the lens optical group (20) further comprises a focusing lens group (21) arranged along an extending direction of the first optical axis (H), the focusing lens group (21) is capable of sliding along the extending direction of the first optical axis (H) relative to the lens barrel (10); and
wherein the projection lens (1) further comprises a focusing detection assembly (30) comprising a focusing moving element and a focusing detection element, wherein one of the focusing moving element and the focusing detection element is connected to the focusing lens group (21) to move and focus by following the focusing lens group (21), the other thereof is fixedly arranged relative to the lens barrel (10), and the focusing detection element is configured to cooperate with the focusing moving element to detect a position of the focusing lens group (21) relative to the lens barrel (10).

10. The projection lens (1) as claimed in claim 9, wherein the focusing lens group (21), the zoom lens group (22), and the fixed lens group (23) are sequentially arranged along the extending direction of the first optical axis (H); and
wherein one of the focusing moving element and the focusing detection element is connected to the focusing lens group (21), the other thereof is connected to the fixed lens group (23), and the focusing detection element is configured to cooperate with the focusing moving element to detect positions of the focusing lens group (21) and the fixed lens group (23).

11. The projection lens (1) as claimed in claim 9, wherein the focusing detection element is a second magnet, the focusing moving element is a second sensor, and the second sensor is configured to sense a magnetic signal of the second magnet to detect the position of the focusing lens group (21) relative to the lens barrel (10).

12. The projection lens (1) as claimed in claim 11, wherein a maximum sliding distance of the focusing lens group (21) along the extending direction of the first optical axis (H) is less than 5mm.

13. The projection lens (1) as claimed in claim 12, further comprising a first transmission element (51) and a second transmission element (52), wherein:
the first transmission element (51) is a zoom barrel;
the second transmission element (52) is a focusing ring;
the first transmission element (51) is movably connected to the lens barrel (10) and drivingly connected to the zoom lens group (22);
the second transmission element (52) is movably connected to the lens barrel (10) and drivingly connected to the focusing lens group (21);
the first transmission element (51) is configured to drive the zoom lens group (22) to slide along the extending direction of the first optical axis (H); and
the second transmission element (52) is configured to drive the focusing lens group (21) to slide along the extending direction of the first optical axis (H).

14. The projection lens (1) as claimed in claim 13, further comprising a drive assembly arranged in the lens barrel (10), wherein:
the drive assembly is electrically connected to the first sensor and the second sensor;
the drive assembly is configured to receive a detection signal of the first sensor and drive the first transmission element (51) to drive the zoom lens group (22) to slide along the extending direction of the first optical axis (H); and
the drive assembly is further configured to receive a detection signal of the second sensor and drive the second transmission element (52) to drive the focusing lens group (21) to slide along the extending direction of the first optical axis (H).

15. A projector, comprising an optical engine and the projection lens (1) as claimed in any one of claims 1-14, wherein the projection lens (1) is connected to the optical engine, and a light source of the optical engine is projected onto an external projection plane through the projection lens (1).
